(19) Europäisches Patentamt
European Patent Office
Office européen des brevets

(11) **EP 1 992 060 B1**

(12) **EUROPÄISCHE PATENTSCHRIFT**

(45) Veröffentlichungstag und Bekanntmachung des Hinweises auf die Patenterteilung:
**31.08.2016 Patentblatt 2016/35**

(21) Anmeldenummer: **07723000.1**

(22) Anmeldetag: **02.03.2007**

(51) Int Cl.:
***H02M 3/155*** *(2006.01)*

(86) Internationale Anmeldenummer:
**PCT/EP2007/001805**

(87) Internationale Veröffentlichungsnummer:
**WO 2007/101618 (13.09.2007 Gazette 2007/37)**

(54) **VORRICHTUNG UND VERFAHREN ZUR GLEICHSPANNUNGSVERSORGUNG VON ELEKTRONISCHEN ANSTEUERSCHALTUNGEN FÜR ELEKTROMOTOREN**

DEVICE AND METHOD FOR DC VOLTAGE SUPPLY OF ELECTRONIC CONTROL CIRCUITS FOR ELECTRIC MOTORS

DISPOSITIF ET PROCÉDÉ D'ALIMENTATION EN TENSION CONTINUE DE CIRCUITS D'EXCITATION ÉLECTRONIQUES POUR DES MOTEURS ÉLECTRIQUES

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **03.03.2006 DE 102006010402**

(43) Veröffentlichungstag der Anmeldung:
**19.11.2008 Patentblatt 2008/47**

(73) Patentinhaber: **Vorwerk & Co. Interholding GmbH 42275 Wuppertal (DE)**

(72) Erfinder: **ZEISKE, Karsten 29223 Celle (DE)**

(74) Vertreter: **Müller, Enno et al Rieder & Partner mbB Patentanwälte - Rechtsanwalt Corneliusstrasse 45 42329 Wuppertal (DE)**

(56) Entgegenhaltungen:
WO-A-02/15374     WO-A-03/005544
WO-A-2005/071823     FR-A- 2 830 696
US-A- 5 604 387

**EP 1 992 060 B1**

**Beschreibung**

Die Erfindung betrifft eine Vorrichtung und ein Verfahren zur Gleichspannungsversorgung von elektronischen Ansteuerschaltungen für Elektromotoren, die einen einfachsten Aufbau, geringen Platzbedarf, hohe Betriebssicherheit und geringe Eigenerwärmung aufweist.

Zur Drehzahl- respektive Drehmomentsteuerung beziehungsweise -reglung oder als Überlastschuitz von Elektromotoren werden oftmals elektronishce Schaltungen eingesetzt, die üblicherweise mit einer Betriebskleinspannung versorgt werden müssen. Diese wird üblicherweise aus Transformatorschaltungen gewonnen, die entweder mit Netzfrequenz arbeiten oder primärseitig getaktet werden. Bei kleinen Baugruppen, wie z.B. elektronisch gesteuerte Haushaltsgeräte oder Elektrowerkzeuge, ist dies von Nachteil, da der Transformator einerseits einen großen Raumbedarf hat und andererseits oft das teuerste Bauelement der Schaltung darstellt.

Eine preisgünstigere Lösung ist die Verwendung einer Einweg-Gleichrichterschaltung, die über Vorwiderstände direkt vom Netz gespeist wird. Bei höherem Gleichstrombedarf scheidet dieses Verfahren jedoch wegen des hohen Wärmeanfalls an den Vorwiderständen häufig aus. Die Verwendung eines geeigneten Vorkondensators ist wiederum wesentlich teurer und wegen des hohen Volumen des Kondensators bei beengten Platzverhältnissen oft nicht realisierbar.

DE 698 30 284 T2 beschreibt ein Schaltnetzteil, das Stoßspannungen und -ströme unterdrückt und so den Wirkungsgrad erhöht. Einhergehend damit ist eine Reduzierung der Erwärmung. Nachteilig sind aber die höheren Kosten gegenüber den oben genannten Varianten.

DE 103 36 425 beschreibt eine Vorrichtung zur Gleichspannungsversorgung von elektrischen Baugruppen in netzbetriebenen Geräten, bei der ein Kondensator über einen Gleichrichter und einen Widerstand bis zum Erreichen einer oberen Schwellspannung geladen wird. Dann wird die Verbindung zwischen Widerstand und Kondensator mit einem elektronischen Schalter unterbrochen. Der Kondensator entlädt sich über die elektrische Baugruppe bis zum Erreichen einer unteren Schwelle, bei der der elektronische Schalter wieder geschlossen wird. Ein Nachteil dieser Schaltung ist der höheren Preis und Platzbedarf.

Aus der Druckschrift WO 02/15374 ist eine Schaltungsanordnung mit einer induktiven Last und einem Drosselwandler bekannt, bei dem die induktive Last als Drossel dient. Ein Speicherkondensator (C12) wird einerseits über eine Diode direkt aus einer Gleichspannungsquelle aufgeladen. Andererseits wird die Ladespannung des Kondensators zusätzlich erhöht durch die Entladung der induktiven Last, in diesem Fall einer Motorwicklung. Eine eigenständige Regelung der Spannung am Speicherkondensator findet nicht statt.

Aus der Druckschrift DE 10149738 ist weiterhin ein elektronisches Gerät bekannt, dass ein elektromagnetisches Stellglied umfasst, dessen Spule gleichzeitig Teil eines Spannungswandlers ist. Die Spule wird über einen Schalter an ein Betriebsspannungspotenzial geschaltet. Ein Kondensator ist ebenfalls vorgesehen. Die Spule, der Kondensator und der Schalter bilden einen Spannungswandler. Auch hier fehlt eine eigenständige Regelung der Spannung an diesen Kondensator.

Der Erfindung liegt die Aufgabe zugrunde, eine Vorrichtung zur Gleichspannungsversorgung von elektronischen Ansteuerschaltungen für Elektromotoren zu schaffen, die eine stabile Ausgangsspannung liefert und einen einfachsten Aufbau, geringen Platzbedarf, hohe Betriebssicherheit und geringe Eigenerwärmung aufweist.

Erfindungsgemäß wird diese Aufgabe durch eine Vorrichtung mit den Merkmalen des 1. Patentanspruchs und durch ein Verfahren mit den Merkmalen des 7. Patentanspruchs gelöst.

Die mit der Erfindung erzielten Vorteile bestehen insbesondere darin, dass die Motorwicklung neben ihrer ursächliche Aufgabe zur Erzeugung eines Drehmomentes an der Motorachse bei Bestromung auch als Abwärtswandler zur Niederspannungserzeugung genutzt wird.

Weitere Einzelheiten der Erfindung werden anhand der Figuren beschrieben:

Figur 1     zeigt schematisch die erfindungsgemäße Vorrichtung,

Figur 2     zeigt zwei mögliche Strom und Spannungsverläufe bei Pulsweitenmodulation,

Figur 3     zeigt ein Ausführungsbeispiel der Erfindung.

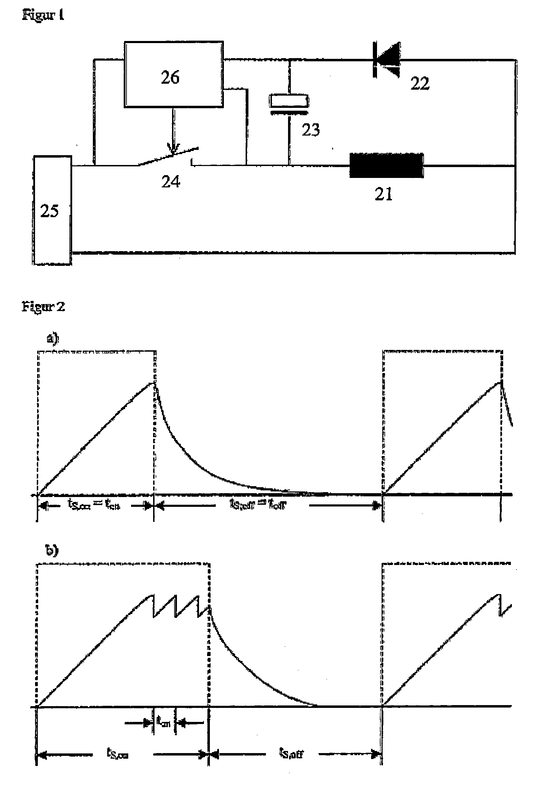

In Figur 1 ist schematisch die erfindungsgemäße Vorrichtung dargestellt. Parallel zur Motorwicklung (21) sind eine Diode (22) und ein Kondensator (23) in Reihe geschaltet. Die Motorwicklung ist über einen Schalter (24) mit einer Spannungsquelle (25) verbunden. Die um eine Regel- und Startvorrichtung erweiterte elektronische Ansteuerschaltung des Elektromotors (26) ist parallel an den Kondensator angeschlossen. Sie steuert den Schalter. Wird der Schalter (24) geschlossen fließt Strom durch die Motorwicklung (21). Ein Magnetfeld baut sich auf und bewirkt im Zusammenhang mit den hier nicht weiter benannten übrigen Komponenten des Elektromotors ein Drehmoment an der Motorachse. Wird der Schalter (24) wieder geöffnet so baut sich das Magnetfeld unter Induktion einer Spannung an der Motorwicklung (21) wieder ab. Die Spannung ruft einen Stromfluss durch die Diode (22) hervor, der den Kondensator (23) lädt. Die irn Kondensator befindliche Ladung speist die elektronische Ansteuerschaltung des Elektromotors (26). Durch periodisches schließen und öffnen des Schalters (24) kann eine kontinuierlich Nachladung des Kondensators erreicht und somit die Spannungsversorgung der elektronischen Ansteuerschaltung des Elektromotors gewährleistet werden.

In bekannten Schaltnetzteilen wird üblicherweise die Ausgangsspannung über den in die Induktanz eingeprägten Strom mittels einer Pulsweitenmodulation geregelt. Das ist bei dieser Erfindung unter Umständen nicht möglich, da der eingeprägte Strom in erster Linie das Drehmoment des Elektromotors bestimmt. Eine Pulsweitenmodulation mit dem Schalter (24) in Figur 1 wird von der Ansteuerschaltung des Elektromotors (26) oftmals zur Drehzahlregelung des Motors benutzt. Das Verhältnis der Zeit $t_{S,on}$, in der der Schalter geschlossen ist, zu der Zeit $t_{S,on} + t_{S,off}$, in der ein vollständiger ein - aus Zyklus durchlaufen wird, bestimmt das Drehzahlverhältnis $n/n_{Nenn} \cong t_{S,on}/t_{S,on} + t_{S,off}$ des Elektromotors gemäss seiner Kennlinie.

Figur 2a zeigt einen möglichen Strom und Spannungsverlauf bei Pulsweitenmodulation ohne Kommutierung. Auf der Abszisse ist die Zeit, auf der Ordinate der Spannungs(gestrichelt) und der Stromverlauf (durchgezogene Linie) an der Motorwicklung aufgetragen. Der eingeprägte Strom in die Motorwicklung ist bei festgelegter Wicklungsinduktivität und Betriebsspannung von der Kommutierungszeit und der Zeit abhängig, in der der Schalter eingeschaltet ist. Die in der Motorwicklung gespeicherte ton Energie $W_{L,in} = \int_0^{t_{on}} I_{in}(t) \cdot (U_{in}(t) - U_{EMK}(t)) dt$ ergibt sich durch Integration des eingeprägten Stroms $I_{in}(t)$ und der Ladespannung ($U_{in}(t)-U_{EMK}(t)$) über die Bestromungsdauer $t_{on}$. Die Ladespannung resultiert dabei aus der Eingangsspannung $U_{in}$ und der im Motor durch die gegenelektromotorischen Kraft (Gegen-EMK) generierte Spannung $U_{EMK}$. Wird der Schalter (24) geöffnet entlädt sich die Motorwicklung über die Diode (22) in den Kondensator (23). Die Entladeenergie $W_{L,out} = \int_0^{t_{off}} I_{out}(t) \cdot (U_C(t) + U_D) dt$ berechnet sich durch Integration des Entladestroms $I_{out}(t)$ und der Entladespannung, die der Summe der Spannungen am Kondensator $U_C(t)$ und der Diodenflussspannung $U_D$ entspricht, über die Entstromungszeit $t_{off}$. Bis auf geringe Verluste ist die in die Motorwicklung eingebrachte und entnommene Energie gleich. Unter der Vorgabe, dass der sägezahnförmige Strom durch die Motorwicklung bei nicht lückendem Betrieb und die Spannungen konstant sind, ergibt sich für die Spannung am Kondensator $U_C = \left(U_{in} - U_{EMK}\right) \dfrac{t_{on}}{t_{on} + t_{off}} - U_D$. Die durch die Gegen-EMK generierte Spannung $U_{EMK} \cong U_{in} \dfrac{t_{S,on}}{t_{S,on} + t_{S,off}}$ ist in erster Näherung proportional zum Drehzahlverhältnis $n/n_{Nenn}$ des Motors und somit zum Verhältnis der Einschaltdauer $t_{S,on}$ zur Dauer $t_{S,on} + t_{S,off}$ eines Ein- und Ausschaltzyklusses. Folglich ergibt sich für die Spannung am Kondensator:

$$U_C = U_{in}\left(1 - \frac{t_{S,on}}{t_{S,on} + t_{S,off}}\right)\frac{t_{on}}{t_{on} + t_{off}} - U_D \qquad (1)$$

Figur 2b zeigt einen möglichen Strom- (durchgezogene Linie) und Spannungsverlauf (gestrichelt) bei Pulsweitenmodulation unter Berücksichtigung der Kommutierung. Die Bestromungszeit $t_{on}$ ist hier kleiner als die Einschaltzeit $t_{S,on}$ des Schalters. Während der Schalter eingeschaltet ist kommt es also zu mindestens einer Kommutierung. Der Strom steigt an bis alle Pole des Motors kommutiert wurden. Bei der Kommutierung wird ein Pol aus dem Stromzweig entnommen und z.B. durch einen Kurzschluss entstromt. Ein entstromter Pol wird wieder in den Stromzweig aufgenommen und bestromt. Der Strom wird somit abhängig von der Kommutierungszeit, also abhängig von der Drehzahl, begrenzt. Entsprechend ist die Energie in Motorwicklung $W_{L,in} = \int_0^{m \cdot t_{on}} I_{in}(t) \cdot (U_{in}(t) - U_{EMK}(t)) dt$ begrenzt, wobei die Anzahl der Kommutierungen m maximal die Polzahl annehmen kann. Analog ergibt sich die Entladeenergie über m Kommutierungen zu $W_{L,out} = \int_0^{m \cdot t_{off}} I_{out}(t) \cdot (U_C(t) + U_D) dt$. Unter gleicher Vorgabe wie oben erhält man für die Spannung am Kondensator wieder Gleichung (1). $t_{on}$ und $t_{off}$ entsprechen hier aber der Zeit zwischen zwei Kommutierungen und sind somit gleich. Daher folgt:

$$U_C = U_{in} \frac{1}{2}\left(1 - \frac{t_{S,on}}{t_{S,on} + t_{S,off}}\right) - U_D \qquad\qquad (2)$$

Ist die Zyklusdauer der Pulsweitenmodulation größer als die Zeit zwischen zwei Kommutierungen, so ist eine Regelung der Kondensatorspannung $U_C$ unabhängig von der Drehzahl des Motors mit der Pulsweitenmodulation nicht möglich. Da bei relevanten Anwendungen die Spannung $U_C$ eher zu hoch ist, kann die Spannung in einer Weiterbildung der Erfindung durch ein entsprechendes Bauteil, z.B. eine Zehnerdiode, begrenzt werden. Eine Spannungsregelung durch z.B. eine einstellbare Last am Kondensator (3) ist ebenfalls möglich.

Ist die Zyklusdauer der Pulsweitenmodulation kleiner als die Zeit zwischen zwei Kommutierungen, so ist eine Regelung der Spannung $U_C$ unabhängig von einer Drehzahlregelung nur bei lückendem Betrieb ($t_{S,on} < t_{on}$, $t_{S,off} > t_{off}$). möglich. Ein lückender Stromfluss ist für den Betrieb eines Elektromotors nicht wünschenswert, da dieser die Verlustleistung erhöht. Kleine Stromlücken sind aber zumeist tolerierbar. Eine Kombination mit den oben genannten Spannungsbegrenzung oder -regelung ist ebenfalls möglich.

Die Vorrichtung kann nicht eigenständig anlaufen, da zum Energieübertrag von der primären Spannungsquelle zur Ansteuerschaltung Schaltungszyklen des Schalters notwendig sind, der wiederum von der Ansteuerschaltung gesteuert wird. Eine Startvorrichtung, die aus der primären Spannungsquelle versorgt wird, sorgt daher für erste Schaltzyklen des Schalters. Es sind verschiedene Varianten von Startvorrichtungen bekannt. Z.B. kann ein Kondensator über einen Widerstand aus der primären Spannungsquelle geladen werden. Über einen Schwellwertschalter wird dann die Motorwicklung beim Erreichen eines ersten Schwellwertes für die Kondensatorladung bestromt. Dabei wird der Kondensator entladen. Unterhalb eines zweiten, niedrigeren Schwellwertes wird der Schwellwertschalter wieder geöffnet. Die Motorwicklung wird entstromt und der Zyklus des Energietransfers ist gestartet.

Eine vorteilhafte Weiterbildung der Erfindung stellt ein zusätzlicher Schalter zwischen Diode und Kondensator dar, der in der einen Schalterstellung den Entladestrom der Motorwicklung in den Kondensator leitet. In der anderen Schalterstellung wird die Verbindung zwischen der Diode und dem Kondensator geöffnet und die Diode direkt parallel zur Motorwicklung geschaltet. Der Entladestrom der Motorwicklung wird bei entsprechender Schalterstellung so lange in den Kondensator geleitet, bis die gewünschte Spannung erreicht ist. Dann wird der Schalter umgelegt und der Entladestrom der Motorwicklung wird kurz geschlossen. Zu Beginn der nächsten Entstromungsphase wird der Kondensator durch zurücklegen des Schalters wieder in den Entladestromkreis der Motorwicklung aufgenommen und der Zyklus beginnt von neuem. In einer Regelschleife kann somit durch Einstellen der Ladezeit des Kondensators die Spannung am Kondensator geregelt werden.

Eine weitere vorteilhafte Ausgestaltung der Erfindung stellt eine steuerbare Stromquelle dar, die z. B. aus einem Verstärker und einem als Emitterfolger geschaltetem Transistor aufgebaut ist. Diese Stromquelle ist als eine Variante der Startvorrichtung innerhalb der Ansteuerschaltung (26 in Figur 1) mit dem einen Anschluss an die primäre Spannungsquelle angeschlossen. Der andere Anschluss ist mit dem Knotenpunkt zwischen dem Kondensator (23) und der Diode (22) verbunden. Ist der Verstärker als invertierender Transimpedanzverstärker ausgeführt, reichen ein in reihe geschalteter Widerstand und Schalter zwischen dem Verstärkereingang und dem Knotenpunkt zwischen der Motorinduktivität (21) und dem Schalter (24), um die Stromquelle nach dem Start mittels des Schalters zu deaktivieren. Beim Start ist der Schalter geschlossen. Wird der Schalter nach dem Start nicht geöffnet fließt der Strom weiter durch die Stromquelle in den Kondensator. Dabei skaliert der Strom der Stromquelle in vers zum Spannungsabfall am Widerstand, also proportional zum Spannungsabfall über der Motorinduktivität. So bleibt die Verlustleistung der Stromquelle unter Vernachlässigung des Offsets unabhängig von der Motordrehzahl konstant. Der Strom der Stromquelle steigt mit wachsender Motordrehzahl. Da mit wachsender Motordrehzahl die Einschaltdauer des Schalters (24) steigt, der die Stromquelle überbrückt, bleibt der mittlere Strom der Stromquelle ebenfalls konstant. Im Allgemeinen kann dieser Strom wegen der Verlustleistung der Stromquelle nicht ausreichend groß gestaltet werden, um die Ansteuerschaltung (26) des Motors damit zu versorgen. Allerdings reicht der Strom aus, um kurze Perioden zu überbrücken, in denen kein Motorstrom fließt, z.B. bei Lastwechseln am Motor, in denen der Motor generatorisch wird.

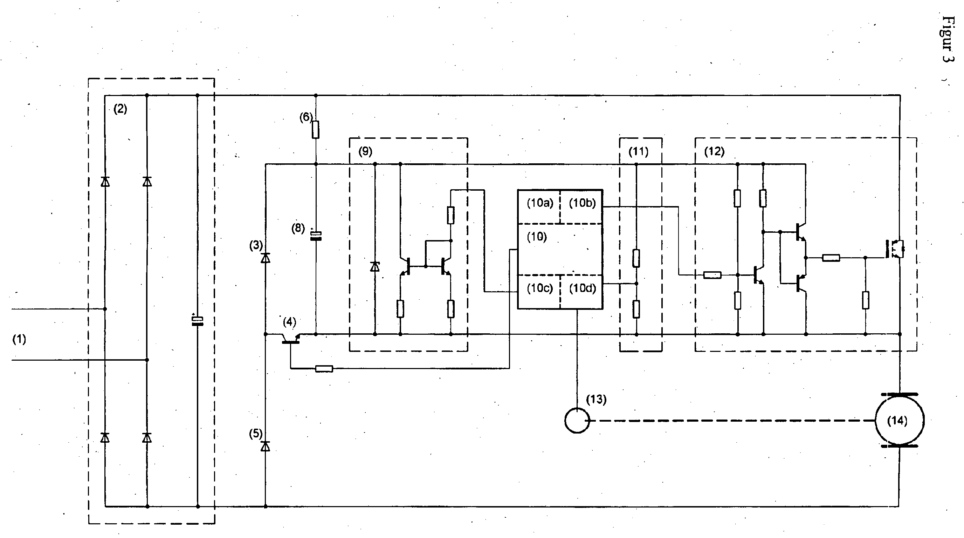

Eine Ausführungsform der Erfindung ist in Figur 3 dargestellt. Die am Eingang (1) angelegte Netzwechselspannung wird in einem Eingangsnetzwerk (2) bestehend aus vier Dioden und einem Kondensator gleichgerichtet und geglättet. Die Ansteuerschaltung des Elektromotors (14) ist in einem Mikrocontroller (10) realisiert. Die Spannungsregelung und die Startvorrichtung sind ebenfalls im Mikrocontroller verwirklicht. Die dazu notwendigen Peripherien wie Clockoszillator (10a), Timer (10b), Digital-Analog Wandler (10c) und Analog-Digital Wandler (10d) sind im Mikrocontroller integriert. Mit dem Clockoszillator und dem Timer wird das Ansteuersignal für den Schalter (12) erzeugt, der als Halbleiterschalter mit Treiberstufe ausgeführt ist. Bei geschlossenem Schalter (12) wird der Motor (14) bestromt. Nach dem öffnen des Schalters entstromt die Motorwicklung über die Diode (5) und lädt den Kondensator (8). Die beim Laden des Kondensators aufgebaute Betriebskleinspannung wird über einen Spannungsteiler (11) an den Eingang des Analog-Digital Wandlers geleitet. Das gewandelte Signal wird für eine Regelung der Spannung eingesetzt. Als Stellglied dient zum Einen der mit der Diode (3) und dem Transistor (4) realisierte Umschalter, der den Entladestrom der Motorwicklung so lange in den Kondensator leitet, bis die gewünschte Spannung erreicht ist. Dann wird der Transistor durchgeschaltet und der Entladestrom der Motorwicklung wird kurz geschlossen. Zum Anderen übernimmt die einstellbare Last der Schutzbeschaltung (9), die der Mikrocontroller über den Digital-Analog Wandler (10c) einstellen kann, zur Spannungsregelung einen Teil des Entladestroms der Motorwicklung. Weiterhin begrenzt die Schutzbeschaltung über eine Zehnerdiode autark die Betriebskleinspannung. Zur Steuer- bzw. Regelung des Motors werden die mit dem Motor mechanisch und mit dem Mikrocontroller elektrisch verbundenen Sensoren (13) vom Mikrocontroller ausgewertet und der Motor wird über den Schalter (12) entsprechend gesteuert.

**Patentansprüche**

1. Vorrichtung zur Erzeugung einer stabilisierten Betriebskleinspannung für eine elektronischen Ansteuerschaltung (10,12) eines mit einer Motorwicklung (21) ausgestatteten Elektromotors (14), welche Vorrichtung eine Gleichspannungsquelle (1, 2; 25), eine Ansteuerschaltung (10,12; 24,26) zum gesteuerten Verbinden der Motorwicklung (21) mit der Gleichspannungsquelle (1, 2; 25), mindestens eine Diode (5; 22) und mindestens einen Kondensator (8; 23) umfasst, wobei die mindestens eine Diode (3, 5; 22) und der mindestens eine Kondensator (8); 23, derart in Reihe geschaltet parallel an die Motorwicklung (21) angeschlossen sind, dass beim Trennen der Motorwicklung (21) von der Gleichspannungsquelle (1, 2; 25) der mindestens eine Kondensator (8; 23) durch den in der Motorwicklung (21) fließende Entladestrom aufgeladen wird, und wobei eine aus der Gleichspannungsquelle (1, 2; 25) versorgte Startvorrichtung für das Anlaufen der Vorrichtung vorgesehen ist, wobei eine Regelschaltung (10) mit einem Schalter (3, 4) zwischen Diode (5) und Kondensator (8) vorgesehen ist, welcher in der einen Schalterstellung den Entladestrom der Motorwicklung (21) in den Kondensator (8) leitet und in der anderen Schalterstellung die Verbindung zwischen der Diode (5) und dem Kondensator (8) öffnet und die Diode (5) direkt parallel zur Motorwicklung (21) schaltet.

2. Vorrichtung nach Anspruch 1, **dadurch gekennzeichnet, dass** parallel zum Kondensator (8) eine einstellbare Last (9) angeschlossen ist.

3. Vorrichtung nach Anspruch 2, **dadurch gekennzeichnet, dass** zur Einstellung der Last (9) ein Mikrokontroller (10) mit einem Digital-Analog-Wandler (10c) vorgesehen ist.

4. Vorrichtung nach einem der Ansprüche 1 bis 3, **dadurch gekennzeichnet, dass** eine Überspannungsschutzschaltung (9) parallel an den Kondensator (8) angeschlossen ist und vorzugsweise mit Zener-, Transil- oder Suppressordiode oder als Transistorschaltung ausgeführt ist.

5. Vorrichtung nach einem der Ansprüche 1 bis 4, **dadurch gekennzeichnet, dass** die Startvorrichtung als steuerbare Stromquelle ausgebildet ist, die innerhalb der Ansteuerschaltung (24,26) mit dem einen Anschluss an die Gleichspannungsquelle (25) angeschlossen ist, und deren anderer Anschluss mit dem Knotenpunkt zwischen dem Kondensator (23) und der Diode (22) verbunden ist.

6. Vorrichtung nach Anspruch 5, **dadurch gekennzeichnet, dass** die steuerbare Stromquelle aus einem Verstärker und einem als Emitterfolger geschalteten Transistor aufgebaut ist.

7. Verfahren zur Erzeugung der stabilisierten Betriebskleinspannung für eine elektronische Ansteuerschaltung (10,12) eines mit einer Motorwicklung (21) ausgestatteten Elektromotors (14) unter Verwendung der Motorwicklung (21), mindestens einer Diode (5) und mindestens eines Kondensators (8), welche in Serie geschaltet parallel zur Motorwicklung (21) angeordnet sind, und einer Ansteuerschaltung (10,12) zum gesteuerten Verbinden der Motorwicklung (21) mit einer Gleichspannungsquelle (1, 2; 25), wobei die Ansteuerschaltung zeitweise die Motorwicklung (21) mit der Gleichspannungsquelle (1, 2; 25) verbindet, so dass die Motorinduktanz aufgeladen wird, und die Verbindung wieder öffner so dass die Motorinduktanz sich über die Diode (5) entlädt und damit den Kondensator (8) auflädt, wobei zur Regelung der Betriebskleinspannung am Kondensator (8) innerhalb eines Ansteuerzyklus des Eelektromotors (14) der Entladestrom der Motorwicklung (21) jeweils so lange in den Kondensator (8) geleitet wird, bis die gewünschte Spannung erreicht ist und dann der Entladestrom der Motorwicklung (21) kurzgeschlossen wird.

8. Verfahren nach Anspruch 7, **dadurch gekennzeichnet, dass** durch das Einstellen einer Last (9), die parallel an den Kondensator (8) angeschlossen ist, in einer Regelschleife am Kondensator (8) die vorgegebene Spannung einstellt wird.

9. Verfahren nach Anspruch 8, **dadurch gekennzeichnet, dass** sich durch periodisches Hochohmigschalten der Last (9), die parallel an den Kondensator (8) angeschlossen ist, durch eine Regelschaltung, wobei das Verhältnis von der Dauer, in der die Last (9) hochohmig ist, zur Gesamtdauer eines Schaltzyklusses in einer Regelschleife eingestellt wird, am Kondensator (8) die vorgegebene Spannung einstellt wird.

**Claims**

1. Device for generating a stabilised low operating voltage for an electronic trigger circuit (10, 12) of an electric motor (14) equipped with a motor winding (21), which device comprises a DC voltage source (1, 2; 25), a trigger circuit (10, 12; 24, 26) for connecting the motor winding (21) to the DC voltage source (1, 2; 25) in a controlled manner, at least one diode (5; 22) and at least one capacitor (8; 23), wherein the at least one diode (3, 5; 22) and the at least one capacitor (8; 23), which are connected in series, are connected in parallel with the motor winding (21) such that, when the motor winding (21) is disconnected from the DC voltage source (1, 2; 25), the at least one capacitor (8; 23) is charged by the discharge current flowing in the motor winding (21), and wherein a starting device for starting the device is provided which is powered by the DC voltage source (1, 2; 25), wherein a regulating circuit (10) having a switch (3, 4) between the diode (5) and the capacitor (8) is provided, which switch conducts the discharging current of the motor winding (21) into the capacitor (8) in one switch position, and, in the other switch position, breaks the connection between the diode (5) and the capacitor (8), and connects the diode (5) directly in parallel with the motor winding (21).

2. Device according to claim 1, **characterised in that** an adjustable load (9) is connected in parallel with the capacitor (8).

3. Device according to claim 2, **characterised in that** a microcontroller (10) is provided with a digital-to-analog converter (10c) in order to adjust the load (9).

4. Device according to any of claims 1 to 3, **characterised in that** an overvoltage protection circuit (9) is connected in parallel with the capacitor (8) and is preferably designed to have a Zener, Transil or transient voltage suppressor diode or as a transistor circuit.

5. Device according to any of claims 1 to 4, **characterised in that** the starting device is designed as a controllable current source which is connected to the DC voltage source (25) within the trigger circuit (24, 26) by one terminal, and the other terminal of which is connected to the node between the capacitor (23) and the diode (22).

6. Device according to claim 5, **characterised in that** the controllable current source is formed by an amplifier and a transistor which functions as an emitter follower.

7. Method for generating the stabilised low operating voltage for an electronic trigger circuit (10, 12) of an electric motor (14) equipped with a motor winding (21), using the motor winding (21), at least one diode (5) and at least one capacitor (8), which are connected in series and arranged in parallel with the motor winding (21), and a trigger circuit (10, 12) for connecting the motor winding (21) to a DC voltage source (1, 2; 25) in a controlled manner, wherein the trigger circuit temporarily connects the motor winding (21) to the DC voltage source (1, 2; 25) such that the inductive reactance of the motor is charged, and breaks the connection again such that the inductive reactance of the motor is discharged by means of the diode (5) and thus charges the capacitor (8), wherein, in order to control the low operating voltage at the capacitor (8) in a trigger cycle of the electric motor (14), the discharging current of the motor winding (21) is conducted into the capacitor (8) until the desired voltage is reached in each case, and then the discharging current of the motor winding (21) is shorted.

8. Method according to claim 7, **characterised in that** the preset voltage is adjusted by adjusting a load (9), which is connected in parallel with the capacitor (8), in a regulation loop at the capacitor (8).

9. Method according to claim 8, **characterised in that** the preset voltage is adjusted at the capacitor (8) by periodically switching the load (9), which is connected in parallel with the capacitor (8), to a highly resistive state using a regulating circuit, the ratio of the duration for which the load (9) is highly resistive to the total duration of a switching cycle being adjusted in a regulation loop.

**Revendications**

1. Dispositif pour générer une basse tension d'alimentation stabilisée pour un circuit électronique d'excitation (10, 12) d'un moteur électrique (14) pourvu d'un enroulement (21), lequel dispositif comprend une source de tension continue (1, 2 ; 25), un circuit d'excitation (10, 12 ; 24, 26) pour relier de manière commandée l'enroulement (21) du moteur avec la source de tension continue (1, 2 ; 25), au moins une diode (5 ; 22) et au moins un condensateur (8 ; 23), dans lequel l'au moins une diode (3, 5 ; 22) et l'au moins un condensateur (8 ; 23) sont reliés en série parallèlement à l'enroulement (21) du moteur de façon à ce que lors de l'ouverture de la liaison entre l'enroulement (21) du moteur et la source de tension continue (1, 2 ; 25), l'au moins un condensateur (8 ; 23) est chargé par le courant de décharge circulant dans l'enroulement (21) du moteur, et dans lequel est prévu un dispositif de démarrage pour démarrer le dispositif lequel dispositif de démarrage est alimenté par la source de tension continue (1, 2 ; 25), dans lequel est prévu un circuit de commande (10) avec un interrupteur (3, 4) entre diode (5) et condensateur (8), lequel, dans une position de l'interrupteur, conduit le courant de décharge de l'enroulement (21) du moteur dans le condensateur (8) et dans l'autre position de l'interrupteur, ouvre la liaison entre la diode (8) et le condensateur (8) et relie la diode (5) directement en parallèle à l'enroulement (21) du moteur.

2. Dispositif selon la revendication 1, **caractérisé en ce qu'**une charge réglable (9) est connectée en parallèle au condensateur (8).

3. Dispositif selon la revendication 2, **caractérisé en ce qu'**est prévu un microcontrôleur (10) avec un convertisseur numérique-analogique (10c) pour le réglage de la charge (9).

4. Dispositif selon l'une des revendications 1 à 3, **caractérisé en ce qu'**un circuit de protection contre les surtensions (9) est connecté en parallèle au condensateur (8) et qui est préférentiellement réalisé avec des diodes Zener, Transil ou suppresseuses ou en tant que circuit à transistors.

5. Dispositif selon l'une des revendications 1 à 4, **caractérisé en ce que** le dispositif de démarrage est réalisé sous forme de source de courant commandée qui est connectée à l'intérieur du circuit d'excitation (24, 26) par une borne à la source de tension continue (25), et son autre borne est connectée au noeud entre la condensateur (23) et la diode (22).

6. Dispositif selon la revendication 5, **caractérisé en ce que** la source de courant commandée est réalisée avec un amplificateur et un transistor monté en émetteur-suiveur.

7. Procédé pour générer la basse tension d'alimentation stabilisée pour un circuit électronique d'excitation (10, 12) d'un moteur électrique (14) pourvu d'un enroulement (21) lequel utilise l'enroulement (21) du moteur, au moins une diode (5) et au moins un condensateur (8) lesquels sont reliés en série parallèlement à l'enroulement (21) du moteur, et un circuit d'excitation (10, 12) pour relier de manière commandée l'enroulement (21) du moteur avec une source de tension continue (1, 2 ; 25), dans lequel le circuit d'excitation relie par intermittence l'enroulement (21) du moteur avec la source de tension continue (1, 2 ; 25) de manière à charger l'inductance du moteur, et ouvre à nouveau la liaison de manière à ce que l'inductance du moteur se décharge à travers la diode (5) et charge ce faisant le condensateur (8), dans lequel, pour régler la basse tension d'alimentation du condensateur (8) au sein d'un cycle d'excitation du moteur (14), le courant de décharge de l'enroulement (21) du moteur est à chaque fois dirigé dans le condensateur (8) le temps qu'il convient pour que la tension souhaitée soit atteinte, puis le courant de décharge de l'enroulement (21) du moteur est court-circuité.

8. Procédé selon la revendication 7, **caractérisé en ce que** la tension prédéterminée du condensateur (8) est réglée de par le réglage d'une charge (9) dans une boucle de régulation laquelle charge (9) est connectée en parallèle au condensateur (8).

9. Procédé selon la revendication 8, **caractérisé en ce que** la tension prédéterminée du condensateur (8) est réglée en commutant périodiquement la charge (9), laquelle est montée en parallèle au condensateur (8), en haute impédance par un circuit de commande, dans lequel le rapport entre la durée pendant laquelle la charge (9) est en haute impédance et la durée totale d'un cycle de commutation est réglé dans une boucle de régulation.

Figur 1

Figur 2

a)

b)

Figur 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 69830284 T2
- DE 10336425
- WO 0215374 A
- DE 10149738